# EUROPÄISCHE PATENTSCHRIFT

(11) **EP 3 746 685 B1**
(45) Veröffentlichungstag und Bekanntmachung des Hinweises auf die Patenterteilung: **20.03.2024**
(21) Anmeldenummer: 18833405.6
(22) Anmeldetag: 14.12.2018
(51) Int. Cl.: F16K 1/20, F16K 1/36

(54) **ENTNAHMEARMATUR FÜR FLÜSSIGKEITSBEHÄLTER**
EXTRACTION FITTING FOR LIQUID CONTAINERS
ROBINETTERIE DE SOUTIRAGE POUR RÉSERVOIR À LIQUIDES

(30) Priorität: 30.01.2018 DE 102018102062
(43) Veröffentlichungstag der Anmeldung: 09.12.2020
(73) Patentinhaber: Protechna S.A., 1701 Fribourg (CH)
(72) Erfinder: KLEIN, Thilo, 53127 Bonn (DE)
(74) Vertreter: advotec.
(86) Internationale Anmeldenummer: PCT/EP2018/084923
(87) Internationale Veröffentlichungsnummer: WO 2019/149421

(56) Entgegenhaltungen:
- WO-A1-2015/147197
- AU-B2- 407 295
- DE-A1- 19 727 236
- GB-A- 2 021 734
- JP-A- 2013 044 415

## Beschreibung

Die Erfindung betrifft eine Entnahmearmatur für Flüssigkeitsbehälter, insbesondere zum Anschluss an den Auslaufstutzen oder die Auslauföffnung eines Transport- und Lagerbehälters für Flüssigkeiten, mit einem Armaturengehäuse in dem ein mit einer Ventilwelle verschwenkbarer Ventilkörper zum Öffnen und Schließen eines Durchflussquerschnitts eines Auslaufrohres des Armaturengehäuses angeordnet ist, wobei der Ventilkörper eine Ventildichtung aufweist, die zumindest teilweise an einem Umfangsrand des Ventilkörpers angeordnet ist, derart, dass in einer Absperrstellung des Ventilkörpers ein zwischen dem Ventilkörper und einer Innenwand des Auslaufrohres gebildeter Ventilspalt in einer radialen Dichtungsebene durch die Ventildichtung abgedichtet ist, wobei der Ventilkörper in der Absperrstellung in dem Durchflussquerschnitt des durch das Armaturengehäuse ausgebildeten Auslaufrohres angeordnet ist, wobei außer dem Umfangsrand nur eine zur Absperrung einem Flüssigkeitsvolumen zugewandte Innenseite des Ventilkörpers von der Ventildichtung derart bedeckt ist, dass eine auf der Innenseite angeordnete Flüssigkeitskontaktfläche von der Ventildichtung ausgebildet wird, wobei der Ventilkörper eine der Innenseite gegenüberliegende und einer Auslauföffnung zugewandte Außenseite aufweist.

Um eine sichere Abdichtung des Durchflussquerschnitts zu ermöglichen, ist es erforderlich, dass einerseits der Ventilkörper eine ausreichende Steifigkeit aufweist, um eine sichere Übertragung eines über die Ventilwelle auf den Ventilkörper aufgebrachten Drehmoments zu ermöglichen, ohne dass hiermit Verformungen des Ventilkörpers verbunden sind, die zu Verlagerungen der Ventildichtung aus der Dichtungsebene führen könnten und damit eine sichere Abdichtung des Ventilspalts gefährden würden. Zum anderen ist es notwendig, dass die Ventildichtung eine ausreichende Flexibilität aufweist, um eine für die Abdichtung erforderliche Anschmiegung der Ventildichtung an die Innenwand des Auslaufrohres zu gewährleisten.

Darüber hinaus ist es bei der bekannten Entnahmearmatur erforderlich, dass sowohl der Ventilkörper als auch die Ventildichtung, die beide bei der bekannten Entnahmearmatur in einer Absperrstellung einem permanenten Flüssigkeitskontakt ausgesetzt sind, eine ausreichende chemische Beständigkeit gegenüber der Flüssigkeit aufweisen.

Bei der bekannten Entnahmearmatur ist es daher erforderlich, dass der Ventilkörper aus einem Material gebildet ist, das nicht nur die erforderliche Steifigkeit für eine sichere Funktion des Ventilkörpers aufweist, sondern darüber hinaus auch eine für den permanenten Flüssigkeitskontakt ausreichende chemische Beständigkeit.

Die bei der bekannten Entnahmearmatur erforderliche entsprechende Kombination von Eigenschaften des für den Ventilkörper verwendeten Materials schränkt daher die mögliche Materialauswahl von vorneherein ein.

Die WO 2015/147197 A1 zeigt ein Klappenventil, dessen Ventilkörper auf der gesamten Oberfläche mit einer eine Ventildichtung ausbildenden Beschichtung versehen ist.

Die AU 407 295 B2 zeigt einen Ventilkörper, dessen gesamte Oberfläche mit einem Beschichtungsmaterial bedeckt ist.

Aus der JP 2013 044415 A ist eine Entnahmearmatur bekannt, die in einem Armaturengehäuse einen mit einer Ventilwelle verschwenkbaren Ventilkörper zum Öffnen und Schließen eines Durchflussquerschnitts aufweist. Der Ventilkörper ist mit einer Ventildichtung versehen, die neben einem Umfangsrand des Ventilkörpers eine dem Auslaufstutzen des Armaturengehäuses zugewandte Außenseite des Ventilkörpers bedeckt, wobei eine auf der dem Einlaufstutzen des Armaturengehäuses zugewandten Innenseite des Ventilkörpers ausgebildete Flüssigkeitskontaktfläche keine Ventildichtung aufweist.

Die DE 197 27 236 A1 zeigt die Ausgestaltung eines Ventilkörpers aus Metall, der zur Abdeckung mit Kunststoffschalen versehen ist.

Aus der GB 2 021 734 A ist ein Klappenventil nach dem Oberbegriff des Anspruchs 1 bekannt, das einen Ventilkörper aufweist, der mit einer unabhängig vom Ventilkörper ausgebildeten Ventildichtung versehen ist, die außer dem Umfangsrand des Ventilkörpers nur noch die dem Flüssigkeitsvolumen zugewandte Innenseite des Ventilkörpers abdeckt.

Der vorliegenden Erfindung liegt die Aufgabe zugrunde, eine Entnahmearmatur vorzuschlagen, die eine Materialauswahl für den Ventilkörper unabhängig von der chemischen Beständigkeit des Materials ermöglicht, um das für den Ventilkörper verwendete Material ohne besondere Anforderungen an die chemische Beständigkeit in erster Linie hinsichtlich der mechanischen Eigenschaften optimieren zu können, und eine Teilereduzierung der zur Herstellung der Entnahmearmatur notwendigen Einzelteile ermöglicht.

Zur Lösung dieser Aufgabe weist die erfindungsgemäße Entnahmearmatur die Merkmale des Anspruchs 1 auf.

Erfindungsgemäß ist außer dem Umfangsrand nur eine zur Absperrung einem Flüssigkeitsvolumen zugewandte Innenseite des Ventilkörpers von der Ventildichtung derart bedeckt, dass eine auf der Innenseite angeordnete Flüssigkeitskontaktfläche von der Ventildichtung ausgebildet wird.

Die erfindungsgemäße Ausgestaltung der Entnahmearmatur vermeidet somit in der Absperrstellung einen Flüssigkeitskontakt zwischen dem Ventilkörper und der Flüssigkeit, sodass der Ventilkörper ohne Rücksicht auf eine besondere chemische Beständigkeit im Hinblick auf seine mechanischen Eigenschaften optimiert werden kann.

Hierzu ist die auf der Innenseite angeordnete Flüssigkeitskontaktfläche von der Ventildichtung ausgebildet, sodass die Oberfläche der Innenseite des Ventilkörpers durch dasselbe Material gebildet ist, wie das zur sicheren Abdichtung des Ventilkörpers gegenüber dem Auslaufrohr verwendete Material, also dem Material der Ventildichtung.

Somit kann sich etwa ein zur Herstellung der Ventildichtung verwendetes Polypropylen gleichzeitig auf der Innenseite des Ventilkörpers befinden, sodass der Ventilkörper auf seiner Innenseite von einem direkten Flüssigkeitskontakt durch das Material der Ventildichtung abgeschirmt wird. Bei der Auswahl des zur Herstellung des Ventilkörpers verwendeten Materials kann daher dasjenige Material verwendet werden, das in erster Linie die gewünschte Steifigkeit des Ventilkörpers ermöglicht, ohne das Rücksicht auf die besondere chemische Beständigkeit des Materials genommen werden müsste. Damit erweist es sich in der Praxis beispielsweise unkritisch, wenn bei einem zur Herstellung des Ventilkörpers verwendeten faserverstärkten Kunststoffmaterial, also beispielsweise Polypropylen, das einen Glasfaseranteil aufweist, Glasfasern, die gegenüber bestimmten, häufig in einem Transport- und Lagerbehälter aufgenommenen Flüssigkeiten keine chemische Beständigkeit aufweisen, in der Oberfläche des Ventilkörpers exponiert angeordnet sind, da die Oberfläche des Ventilkörpers zumindest auf seiner Innenseite durch die Ventildichtung bzw. das für die Ventildichtung verwendete Material gegenüber einem unmittelbaren Flüssigkeitskontakt abgeschirmt ist.

Erfindungsgemäß ist die Ventildichtung auf einer Dichtungskontaktfläche stoffschlüssig mit dem Ventilkörper verbunden, sodass in jedem Fall die Ausbildung eines Zwischenraums zwischen dem Ventilkörper und der Ventildichtung, in den Flüssigkeit eindringen könnte, verhindert wird. Darüber hinaus ist somit die komplette Herstellung des Ventilkörpers zusammen mit der Ventildichtung in einem Spritzgießverfahren möglich.

Damit ist auch eine Teilereduzierung der zur Herstellung der Entnahmearmatur notwendigen Einzelteile ermöglicht, da eine von dem Ventilkörper unabhängige Bereitstellung der Ventildichtung bei dieser vorteilhaften Ausgestaltung der Entnahmearmatur obsolet wird.

Wenn zur Ausbildung der stoffschlüssigen Verbindung die Dichtungskontaktfläche des Ventilkörpers mit axialen Vorsprüngen versehen ist, die aus der radialen Dichtungsebene hervorragen, ist eine vergrößerte Kontaktoberfläche realisierbar, die für eine besonders gute Haftung der Ventildichtung auf dem Ventilkörper sorgt.

Vorzugsweise weist die Dichtungskontaktfläche des Ventilkörpers keine radialen Rücksprünge auf, sodass bei der Herstellung des mit der Ventildichtung versehenen Ventilkörpers in einem Spritzgießverfahren eine Ausformung des Ventilkörpers nicht die Verwendung eines mit Formschiebern versehenen Formwerkzeugs erforderlich macht.

Wenn darüber hinaus die Ventildichtung mit einer axialen Endfläche eines am Umfangsrand des Ventilkörpers angeordneten Dichtungsrands im wesentlichen flächenbündig mit einer der Innenseite des Ventilkörpers gegenüberliegenden Außenseite des Ventilkörpers angeordnet ist, erfordert die Herstellung des mit der Ventildichtung versehenen Ventilkörpers in einem Zwei-Komponenten-Spritzgießverfahren lediglich den Austausch einer Formhälfte einer der beiden für die Herstellung des Ventilkörpers benötigten Formhälften eines Formwerkzeugs, wobei der Ventilkörper während der Herstellung in ein und derselben Formhälfte verbleiben kann.

Damit wird ein vor der Kombination des Ventilkörpers mit der Ventildichtung bislang erforderlicher Entformungsschritt zur Entformung des Ventilkörpers aus einer Formhälfte und Einlegen des Ventilkörpers in eine neue Formhälfte vor dem Anspritzen der Ventildichtung an den Ventilkörper obsolet.

Nachfolgend wird eine bevorzugte Ausführungsform der Entnahmearmatur anhand der Zeichnungen näher erläutert.

Es zeigen:
- **Fig. 1**: eine an einem Auslaufstutzen eines Transport- und Lagerbehälters für Flüssigkeiten angeordnete Entnahmearmatur in Absperrstellung;
- **Fig. 2**: die in **Fig. 1** dargestellte Entnahmearmatur in Kombination mit dem Auslaufstutzen unabhängig von dem in **Fig. 1** dargestellten Flüssigkeitsbehälter;
- **Fig. 3**: die in **Fig. 2** in Absperrstellung dargestellte Entnahmearmatur in Öffnungsstellung;
- **Fig. 4**: eine perspektivische Darstellung eines Ventilkörpers der in den **Fig. 1** bis **3** dargestellten Entnahmearmatur mit Draufsicht auf eine Außenseite des Ventilkörpers;
- **Fig. 5**: den in **Fig. 4** dargestellten Ventilkörper mit Draufsicht auf eine Innenseite des Ventilkörpers;
- **Fig. 6**: den in den **Fig. 4** und **5** dargestellten Ventilkörper in Draufsicht;
- **Fig. 7**: den in **Fig. 6** dargestellten Ventilkörper in einer Schnittansicht gemäß Schnittlinienverlauf VII-VII in **Fig. 6****;**
- **Fig. 8** und **9**: zwei aufeinanderfolgende Phasen bei der Herstellung des mit der Ventildichtung versehenden Ventilkörpers in einem Zwei-Komponenten-Spritzgießverfahren.

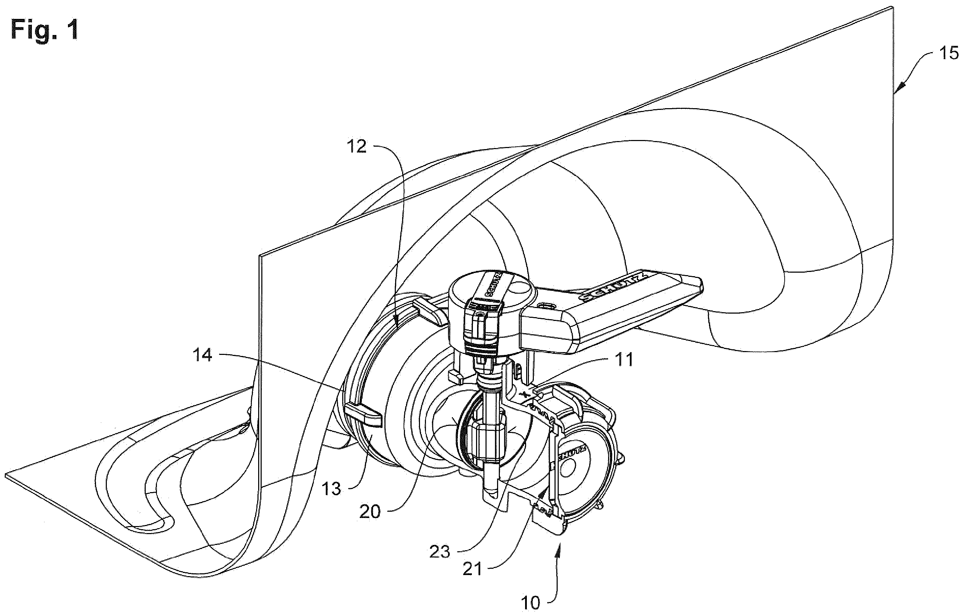

**Fig. 1** zeigt eine Entnahmearmatur 10, die ein Armaturengehäuse 11 aufweist, das an einem Einlaufende 12 mittels einer Überwurfmutter 13 mit einem Auslaufstutzen 14 verbunden ist, der an einem Flüssigkeitsbehälter 15 angeordnet ist, von dem in **Fig. 1** lediglich der Armaturenanschlussbereich dargestellt ist. Flüssigkeitsbehälter 15 der Art, wie in **Fig. 1** dargestellt, beispielsweise in einem Blasformverfahren hergestellte Behälter, die einen Bestandteil eines Intermediate Bulk Containers (IBC) und als Innenbehälter in einem auf einer Palette angeordneten Gitterkäfig angeordnet sind.

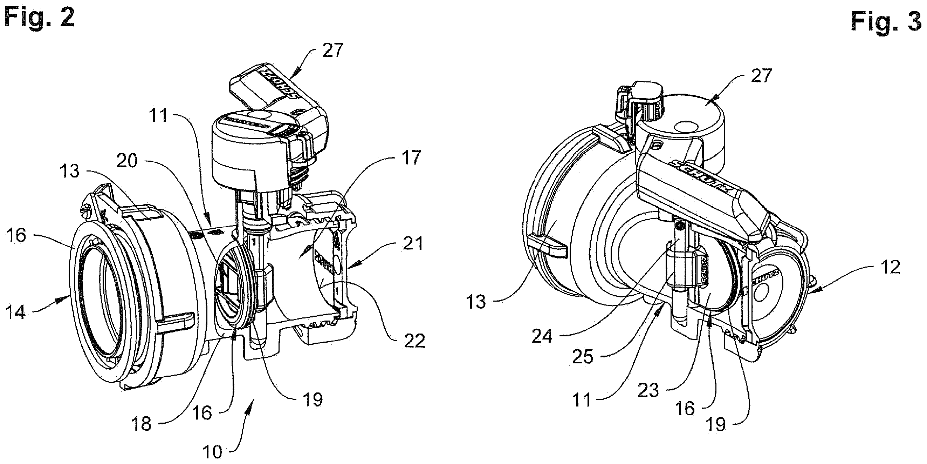

Wie insbesondere **Fig. 2** zeigt, ist im Fall des dargestellten Ausführungsbeispiels die Entnahmearmatur 10 in Kombination mit dem unabhängig von dem Flüssigkeitsbehälter 15 ausgebildeten Auslaufstutzen 14 als eine Montageeinheit ausgebildet, die zum Anschluss an den Flüssigkeitsbehälter 15 mittels einer Schweißverbindung zwischen einem Verbindungsflansch 16 des als Anschweißstutzen ausgebildeten Auslaufstutzens 14 und einem in **Fig. 1** nicht näher dargestellten Öffnungsrand einer im Flüssigkeitsbehälter 15 ausgebildeten Auslauföffnung mit dem Flüssigkeitsbehälter 15 verbunden werden kann.

In den **Fig. 1** und **2** ist die Entnahmearmatur 10 jeweils in ihrer Absperrstellung dargestellt, in der ein Ventilkörper 16 in einem Durchflussquerschnitt 17 eines durch das Armaturengehäuse 11 ausgebildeten Auslaufrohres 18 derart angeordnet ist, dass ein zwischen dem Ventilkörper 16 und dem Auslaufrohr 18 gebildeter Ventilspalt in einer radialen Dichtungsebene durch eine am Ventilkörper 16 ausgebildete Ventildichtung 19 abgedichtet ist.

Der Ventilkörper 16 weist eine einem im Flüssigkeitsbehälter 15 aufgenommenen Flüssigkeitsvolumen zugewandte Innenseite 20 auf sowie eine der Innenseite 20 des Ventilkörpers 16 gegenüberliegende und einer durch eine Schraubkappe 21 verschlossenen Auslauföffnung 22 zugewandte Außenseite 23 auf.

Zur Betätigung des Ventilkörpers 16 ist dieser auf der Außenseite 23 mit einer Ventilwelle 24 in einer Wellenaufnahme 25 drehfest verbunden, sodass bei Drehung der Ventilwelle 24 mittels eines auf einem aus dem Armaturengehäuse 11 herausgeführten Wellenende verbundenen Handgriffs 27 ein Verschwenken des Ventilkörpers 16 aus der in den **Fig. 1** und **2** dargestellten Absperrstellung in die in **Fig. 3** dargestellte Öffnungsstellung erfolgen kann.

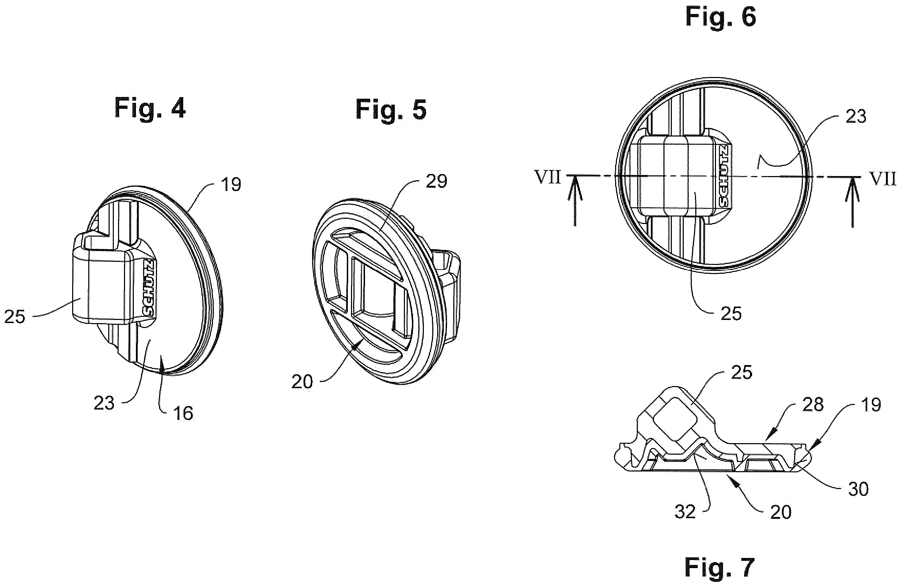

In den **Fig. 4** bis **7** ist der mit der Ventildichtung 19 versehene Ventilkörper 16 als Einzelteil dargestellt, wobei insbesondere in den **Fig. 5** und **7** zu erkennen ist, dass der Ventilkörper 16 auf der Innenseite 20 eine an seinem Umfangsrand 29 umlaufend ausgebildete Randerhöhung 30 und eine aussteifende Stegstruktur aufweist und auf der Außenseite 23 mit der Wellenaufnahme 25 versehen ist. Abgesehen davon, dass die vorstehend erläuterte Ausgestaltung des Ventilkörpers 16 eine große Steifigkeit des Ventilkörpers ermöglicht, weist der Ventilkörper 16 aufgrund der besonderen Ventilkörpergeometrie einen Ventilkörperquerschnitt 28 mit einer im Wesentlichen einheitlichen Wandstärkenausbildung auf, die eine Herstellung des Ventilkörpers 16 in einem Spritzgießverfahren begünstigt.

Wie insbesondere die **Fig. 7** zeigt, ist der Ventilkörper 16 derart mit der Ventildichtung 19 versehen, dass sich die Ventildichtung 19 nicht nur am Umfangsrand 29 des Ventilkörpers 16 erstreckt, sondern darüber hinaus eine auf der Innenseite 20 angeordnete Flüssigkeitskontaktfläche 32 von der Ventildichtung 19 ausgebildet wird.

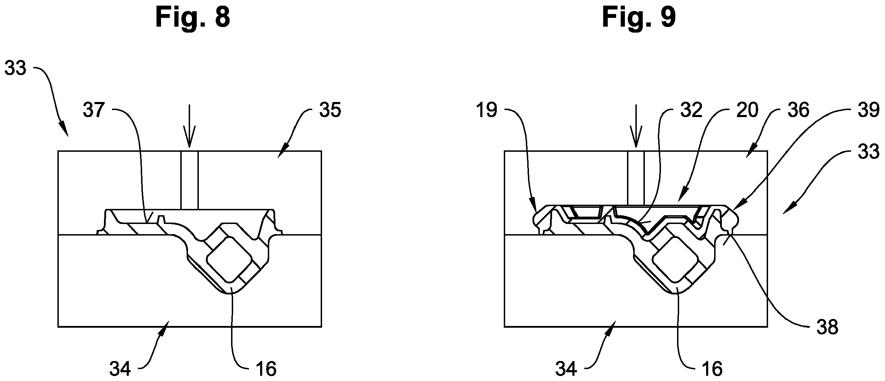

Vorzugsweise wird der Ventilkörper 16 zusammen mit der Ventildichtung 19 in einem Zwei-Komponenten-Spritzgießverfahren hergestellt, dass die Herstellung des mit der Ventildichtung 19 versehenen Ventilkörpers 16 in einem in den **Fig. 8** und **9** schematisch dargestellten zweiphasigen Spritzgießverfahren ermöglicht.

Zunächst wird zur Herstellung des Ventilkörpers 16 ein Formwerkzeug 33 mit einer unteren Formhälfte 34 und einer oberen Formhälfte 35 verwendet, wobei die Einspritzung der im vorliegenden Fall zur Herstellung des Ventilkörpers 16 verwendeten Kunststoffmasse aus Polypropylen mit einem Glasfaseranteil über die obere Formhälfte 35 erfolgt, die gleichzeitig die Topografie der Innenseite des Ventilkörpers 16 ausbildet. Zur Durchführung des in **Fig. 9** dargestellten nachfolgenden Herstellungsschrittes verbleibt der Ventilkörper 16 in der unteren Formhälfte 34 und die obere Formhälfte 35 wird gegen eine neue obere Formhälfte 36 ausgetauscht, die eine von der zuvor verwendeten Formhälfte 35 abweichende Kavität aufweist und durch Einspritzung einer im vorliegenden Fall aus Polypropylen gebildeten Kunststoffmasse die Ausbildung der Ventildichtung 19 auf einer Dichtungskontaktfläche 37 des Ventilkörpers 16 ermöglicht, derart, dass durch die Ventildichtung 19 eine Flüssigkeitskontaktfläche 32 ausgebildet wird, die, wie insbesondere in **Fig. 1** dargestellt, bei einem Anschluss der Entnahmearmatur 10 an einen mit Flüssigkeit befüllten Flüssigkeitsbehälter 15 einem Flüssigkeitskontakt ausgesetzt ist.

Wie aus den **Fig. 8** und **9** ersichtlich, weist die Dichtungskontaktfläche 37 keine radialen Rücksprünge auf, sodass nach Herstellung des Ventilkörpers 16 in der in **Fig. 8** dargestellten ersten Phase des Spritzgießverfahrens die obere Formhälfte 35 von der unteren Formhälfte 34 abgenommen werden kann und der Ventilkörper 16 in seiner Anordnung in der unteren Formhälfte 34 verbleibt.

Wie **Fig. 9** zeigt, weist die in dem zweiten Verfahrensschritt in der Kavität der Formhälfte 36 ausgebildete Ventildichtung 19 an einem Dichtungsrand 39 eine axiale Endfläche 38 auf, die derart am Umfangsrand 29 des Ventilkörpers 16 angeordnet ist, dass die axiale Endfläche 36 im Wesentlichen flächenbündig, also ohne Ausbildung eines Absatzes mit der Außenseite 23 des Ventilkörpers angeordnet ist, sodass der Umfangsrand 29 des Ventilkörpers 16 im Wesentlichen vollständig von der Ventildichtung 19 abgedeckt ist, ohne dass die Ventildichtung 19 axial in die untere Formhälfte 34 hineinragt und somit vor der Entformung des mit der Ventildichtung 19 versehenen Ventilkörpers 16 aus der oberen Formhälfte 36 die untere Formhälfte leicht entfernt werden kann.

## Patentansprüche

1. Entnahmearmatur (10) für Flüssigkeitsbehälter (15), insbesondere zum Anschluss an den Auslaufstutzen (14) oder die Auslauföffnung eines Transport- und Lagerbehälters für Flüssigkeiten, mit einem Armaturengehäuse (11), in dem ein mit einer Ventilwelle (24) verschwenkbarer Ventilkörper (16) zum Öffnen und Schließen eines Durchflussquerschnitts (17) eines Auslaufrohres (18) angeordnet ist, wobei der Ventilkörper (16) eine Ventildichtung (19) aufweist, die zumindest teilweise an einem Umfangsrand (29) des Ventilkörpers (16) angeordnet ist, derart, dass in einer Absperrstellung des Ventilkörpers (16) ein zwischen dem Ventilkörper (126) und einer Innenwand des Auslaufrohres (18) gebildeter Ventilspalt in einer radialen Dichtungsebene durch die Ventildichtung (19) abgedichtet ist, wobei der Ventilkörper (16) in der Absperrstellung in dem Durchflussquerschnitt (17) des durch das Armaturengehäuse (11) ausgebildeten Auslaufrohres (18) angeordnet ist, wobei
außer dem Umfangsrand (29) nur eine zur Absperrung einem Flüssigkeitsvolumen zugewandte Innenseite (20) des Ventilkörpers (16) von der Ventildichtung (19) derart bedeckt ist, dass eine auf der Innenseite (20) angeordnete Flüssigkeitskontaktfläche (32) von der Ventildichtung (19) ausgebildet wird, wobei der Ventilkörper (16) eine der Innenseite (20) gegenüberliegende und einer Auslauföffnung (22) zugewandte Außenseite (23) aufweist,
**dadurch gekennzeichnet,**
**dass** die Ventildichtung (19) auf einer Dichtungskontaktfläche (37) des Ventilkörpers (16) stoffschlüssig mit dem Ventilkörper (16) verbunden ist, sodass eine Ausbildung eines Zwischenraums zwischen dem Ventilkörper (16) und der Ventildichtung (19) verhindert wird.

2. Entnahmearmatur nach Anspruch 1,
**dadurch gekennzeichnet,**
**dass** die Dichtungskontaktfläche (37) des Ventilkörpers (16) mit axialen Vorsprüngen versehen ist, die aus der radialen Dichtungsebene hervorragen.

3. Entnahmearmatur nach einem der vorangehenden Ansprüche,
**dadurch gekennzeichnet,**
**dass** die Dichtungskontaktfläche (37) des Ventilkörpers (16) keine radialen Rücksprünge aufweist.

4. Entnahmearmatur nach einem der vorangehenden Ansprüche,
**dadurch gekennzeichnet,**
**dass** die Ventildichtung (19) mit einer axialen Endfläche (38) eines am Umfangsrand (29) des Ventilkörpers angeordnete Dichtungsrands (39) im Wesentlichen flächenbündig mit einer der Innenseite (20) des Ventilkörpers (16) gegenüberliegenden Außenseite (23) des Ventilkörpers (16) angeordnet ist.

## Claims

1. A tapping armature (10) for liquid containers (15), in particular for being connected to the outlet neck (14) or to the outlet opening of a transport and storage container for liquids, said tapping armature having an armature housing (11) in which a valve body (16) for opening and closing a flow cross-section (17) of an outlet tube (18) is arranged, said valve body (16) being pivotable with the help of a valve shaft (24), and said valve body (16) including a valve seal (19) that is arranged, at least partially, at a peripheral edge (29) of the valve body (16), in such a manner that, in a shut-off position of the valve body (16), a valve gap that is formed between the valve body (16) and an internal wall of the outlet tube (18) is sealed in a radial sealing plane by means of the valve seal (19), said valve body (16), in the shut-off position, being arranged in the flow cross-section (17) of the outlet tube (18) realised by the armature housing (11), wherein, except from the peripheral edge (29), only an inner side (20) of the valve body (16), said inner side (20) facing a liquid volume for shut-off, is covered by the valve seal (19) in such a manner that a liquid contact face (32) that is arranged on the inner side (20) is realised by the valve seal (19), said valve body (16) including an outer side (23) which is on the opposite side of the inner side (20) and faces an outlet opening (22),
**characterised in that**
the valve seal (19) is materially bonded to the valve body (16) on a sealing contact face (37) of the valve body (16) so that a clearance is prevented from being formed between the valve body (6) and the valve seal (19).

2. The tapping armature according to claim 1,
**characterised in that**
the sealing contact face (37) of the valve body (16) is provided with axial projections that protrude from the radial sealing plane.

3. The tapping armature according to any one of the preceding claims,
**characterised in that**
the sealing contact face (37) of the valve body (16) does not include any radial offsets.

4. The tapping armature according to any one of the preceding claims,
**characterised in that**
the valve seal (19), with an axial end face (38) of a sealing edge (39) that is arranged at the peripheral edge (29) of the valve body, is arranged so as to be substantially flush mounted with an outer side (23) of the valve body (16), said outer side (23) being opposite from the inner side (20) of the valve body (16).

## Revendications

1. Armature de prélèvement (10) pour des cuves de liquide (15), notamment pour le raccordement à la tubulure de sortie (14) ou l'ouverture de sortie d'une cuve de transport et stockage pour des liquides, ladite armature de prélèvement (10) ayant un boîtier d'armature (11) dans lequel un corps de vanne (16) est disposé, ledit corps de vanne (16) étant pivotable au travers d'un arbre de vanne (24) et servant à ouvrir et fermer une section de passage (17) d'un tuyau de sortie (18), ledit corps de vanne (16) présentant un joint de vanne (19) qui est disposé sur une bordure périphérique (29) du corps de vanne (16) au moins en partie, de telle manière qu'une fente de vanne qui est formée entre le corps de vanne (16) et une paroi intérieure du tuyau de sortie (18) est étanchée dans un plan de joint radial par le joint de vanne (19) dans une position d'arrêt du corps de vanne (16), ledit corps de vanne (16) étant disposé, dans la position d'arrêt, dans la section de passage (17) du tuyau de sortie (18) qui est réalisé par le boîtier d'armature (11), dans lequel sauf la bordure périphérique (29), le joint de vanne (19) ne couvre qu'un côté intérieur (20) du corps de vanne (16), ledit côté intérieur (20) faisant face à un volume de liquide pour effectuer un arrêt, le couvrement étant effectué de telle manière qu'une surface de contact de liquide (32) disposée sur le côté intérieur (20) est réalisée par le joint de vanne (19), ledit corps de vanne (16) présentant un côté extérieur (23) situé en vis-à-vis du côté intérieur (20) et faisant face à une ouverture de sortie (22),
**caractérisée en ce que**
le joint de vanne (19) est relié au corps de vanne (16) par liaison de matière sur une surface de contact de joint (37) du corps de vanne (16) de sorte que la formation d'un interstice est empêchée entre le corps de vanne (16) et le joint de vanne (19).

2. Armature de prélèvement selon la revendication 1,
**caractérisée en ce que**
la surface de contact de joint (37) du corps de vanne (16) est munie d'épaulements axiales qui font saillie du plan de joint radial.

3. Armature de prélèvement selon l'une quelconque des revendications précédentes,
**caractérisée en ce que**
la surface de contact de joint (37) du corps de vanne (16) ne présente aucun retrait radial.

4. Armature de prélèvement selon l'une quelconque des revendications précédentes,
**caractérisée en ce**
**qu'**une surface terminale (38) axiale d'une bordure de joint (39) du joint de vanne (19), ladite bordure de joint (39) étant disposée sur la bordure périphérique (29) du corps de vanne, est essentiellement disposée à fleur d'un côté extérieur (23) du corps de vanne (16), ledit côté extérieur (23) étant situé en vis-à-vis du côté intérieur (20) du corps de vanne (16).
